# EUROPÄISCHE PATENTSCHRIFT

(11) **EP 2 132 073 B1**
(45) Veröffentlichungstag und Bekanntmachung des Hinweises auf die Patenterteilung: **21.11.2012**
(21) Anmeldenummer: 08734766.2
(22) Anmeldetag: 26.03.2008
(51) Int. Cl.: B60T 17/08, B60T 17/22

(54) **KOMPAKT-KOMBIZYLINDER MIT MANUELLER LÖSEVORRICHTUNG**
COMPACT COMBINATION BRAKE CYLINDER COMPRISING A MANUAL RELEASE MECHANISM
CYLINDRE COMBINÉ COMPACT COMPORTANT UN DISPOSITIF DE RELÂCHEMENT MANUEL

(30) Priorität: 27.03.2007 DE 102007015212
(43) Veröffentlichungstag der Anmeldung: 16.12.2009
(73) Patentinhaber: Knorr-Bremse Systeme für Nutzfahrzeuge GmbH, 80809 München (DE)
(72) Erfinder: IRASCHKO, Johann, 85301 Schweitenkirchen (DE)
(74) Vertreter: Mattusch, Gundula
(86) Internationale Anmeldenummer: PCT/EP2008/002365
(87) Internationale Veröffentlichungsnummer: WO 2008/128613

(56) Entgegenhaltungen:
- WO-A-02/44004
- DE-A1-102005 044 708

## Beschreibung

Die Erfindung betrifft einen Bremszylinder für pneumatisch betätigte Fahrzeugbremsen, insbesondere für Nutzfahrzeuge, nach dem Oberbegriff des Anspruchs 1.

Die Feststellbremse wird bei schweren Nutzfahrzeugen mittels so genannter Federspeicherzylinder betätigt. Die Bremsbetätigungskraft wird hierbei über eine gespannte Feder erzeugt, so dass den Anforderungen an eine mechanisch wirkende Feststellbremse genüge getan ist.

Da die Federspeicherzylinder in der Regel dazu ausgelegt sind, sehr hohe Kräfte zu erzeugen, ist ein manuelles Lösen im Betriebsfall nicht mehr sinnvoll. Das Lösen der Feststellbremse geschieht daher bei pneumatisch betätigten Bremsen mittels Druckluft.

Um dies zu ermöglichen, sind Federspeicherzylinder in der Regel mit einem Lösekolben ausgerüstet. Mit diesem Kolben ist es möglich, bei einer Einleitung von Druckluft die Feder soweit zusammen zu drücken, bis die Bremse gelöst ist. Damit die Feststellbremse während der Fahrt nicht eingelegt ist, wird der Kolben ständig mit Druckluft beaufschlagt, so dass sich die Feder nicht entspannen kann und somit die Feststellbremse nicht zur Wirkung kommt.

Die üblichste Bauform ist der so genannte Kombizylinder. Ein Kombizylinder besteht aus bzw. kombiniert zwei verschiedene Bremszylinderarten, nämlich einem Federspeicherzylinder für die Feststellbremsanlage (FBA) und einem Druckluftzylinder (meist einen Membranzylinder) für die Betriebsbremsanlage (BBA).

Üblicherweise sind die beiden Zylinder hintereinander, in axialer Richtung angeordnet. Hinter dem Membranteil des Kombizylinders ist der Federspeicherteil angeordnet, welcher mit seiner Kolbenstange auf den Kolbenteller des Membranzylinders und von diesem auf den Bremshebel wirkt.

Diese Bauform benötigt relativ viel Bauraum. Durch die Einführung aufwendigerer Fahrwerkssysteme, wie z.B. Einzelradaufhängungen, Leichtbauachsen etc wird der Bauraum jedoch zunehmend limitiert.

Es gibt daher Bestrebungen durch andere Bauformen und Wirkungsweisen den Platzbedarf für den Feststellbremszylinder zu minimieren.

Eine kompaktere Bauform bietet insofern der so genannte Kompaktkombizylinder. Einen derartigen Bremszylinder offenbart die DE 10 2005 044 708 A1. Nach dieser Erfindung wird die Funktion des Feststellbremszylinders direkt in den Betriebsbremszylinder integriert. Die Federspeicherfeder wird hierbei nicht mehr über einen separaten Federspeicherkolben betätigt, sondern ebenfalls über den Kolben des Betriebsbremszylinders. Um die Feststellbremse zu lösen, wird für eine kurze Zeitspanne der BBA-Kolben mittels einer speziellen Ansteuerung mit Druckluft beaufschlagt.

Wie vorstehend beschrieben, erfolgt das Lösen der Feststellbremse im Regelfall mit Hilfe von Druckluft. Daneben muss es aber auch möglich sein, die Feststellbremse bei einem Druckverlust durch einen manuellen Vorgang zu lösen.

Bei konventionellen Kombizylindern wird dazu die Feder mit Hilfe einer Gewinde-spindel (der so genannten Lösespindel) zurückgezogen, wie beispielsweise in der WO 02/44004 A1 offenbart ist. Die Funktion des Betriebsbremszylinders ist dadurch nicht beeinträchtigt.

Die Gewindespindel ist dabei so eingebaut, dass beim manuellen Lösen der Federspeicherbremse die Gewindespindel durch den Schraubvorgang aus dem Zylindergehäuse herauskommt. Dadurch ergibt sich ein eindeutiges, visuelles Erkennungsmerkmal für den manuellen Lösezustands des Federspeichers. Im Sinne der Sicherheit ist es sehr wichtig, dass dieser Zustand einfach und klar erkannt werden kann, da bei dieser Situation die Speicherfeder blockiert ist und die Feststellbremse somit nicht über das Feststellbremsventil eingelegt werden kann.

Zum manuellen Lösen der Federspeicherfeder ist bei Kompakt-Bremszylindern eine manuell betätigbare Lösevorrichtung vorgesehen, die es ermöglicht, die Federspeicherwirkung bei Druckverlust ohne Beeinträchtigung der BBA-Funktion aufzuheben. Ferner ist es möglich, nach dem Lösevorgang die FBA-Wirkung durch einen manuellen Vorgang wieder herzustellen.

Beim Kompaktkombizylinder kann das vorstehend beschriebene visuelle Erkennungsmerkmal daher nicht nach Art des Standes der Technik realisiert werden, da die Speicherfeder mit der Arretierspindel durch einen manuellen Eingriff zurückgezogen wird. Die Arretierspindel dient im normalen Betriebszustand dazu, die Speicherfeder in der Stellung "Federspeicher gelöst" zu halten. Da sich diese Spindel aber vollständig im Inneren des Bremszylinders befindet, kann deren Position nicht als Erkennungsmerkmal für den Betriebszustand der Federspeicherbremse verwendet werden.

Die Lösung dieses Problems ist die Aufgabe der Erfindung.

Die Erfindung löst diese Aufgabe durch den Gegenstand des Anspruchs 1.

Vorteilhafte Ausgestaltungen der Erfindung sind in den Unteransprüchen angegeben.

Die Erfindung schafft einen Mechanismus, der es ermöglicht, den manuellen Lösezustand der Federspeicherbremse auch bei Kompaktbremszylindem der vorstehend beschriebenen Art visuell zu erkennen.

Nachfolgend wird die Erfindung unter Bezug auf die Zeichnung anhand eines Ausführungsbeispiels näher erläutert. Es zeigen:
- Figur 1: den erfindungsgemäßen Bremszylinder im Halbschnitt, in der Lösestellung und in der Feststellbremsstellung
- Fig. 2: eine Detailansicht aus Fig. 1; und
- Fig. 3 bis 6: eine teilgebrochene Darstellung von Elementen einer manuell betätigbaren Lösevorrichtung des Kompaktbremszylinders aus Fig. 1 und 2 in verschiedenen Betriebszuständen;
- Fig. 7, 8: Details alternativer Ausgestaltungen von Elementen der Erfindung.

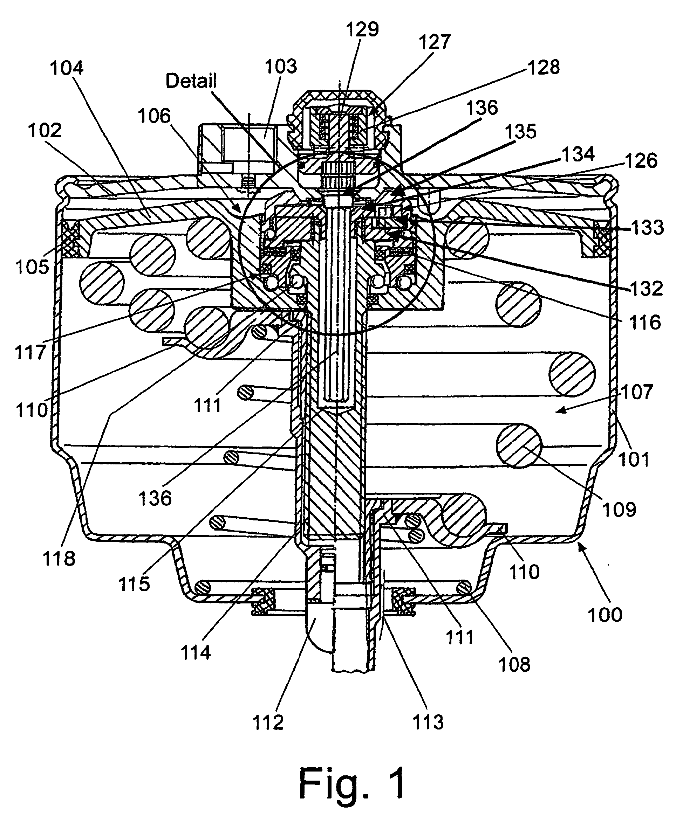

Fig. 1 zeigt einen Schnitt durch einen erfindungsgemäßen Kompaktbremszylinder 100, wobei in der linken Hälfte der Zeichnung der Federspeicher in gelöster Stellung und in der rechten Hälfte der Zeichnung der Federspeicher in eingelegter Stellung dargestellt ist.

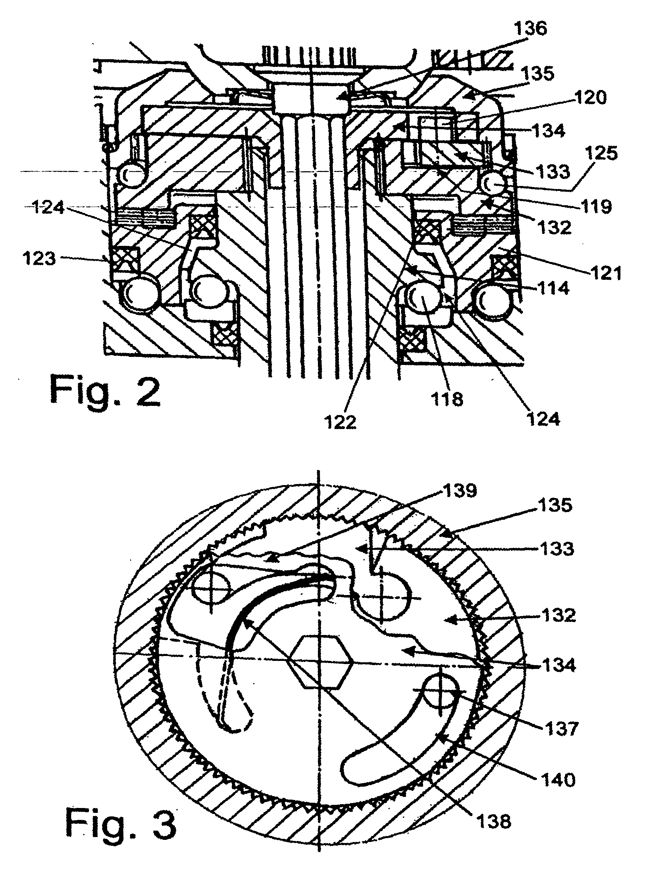

Der in den Figuren 1 bis 3 dargestellte Bremszylinder 100 weist ein topfförmiges - vorzugsweise im Wesentlichen zylindrisches - Gehäuse 101 auf.

Das Gehäuse 101 ist an einem seiner Enden von einem Deckel 102 verschlossen, der mit wenigstens einem oder mehreren Druckluftanschlüssen 103 versehen ist.

In dem topfförmigen Gehäuse 101 ist ein Kolben 104 mit einem Kolbendichtring 105 angeordnet, dessen Durchmesser samt dem Kolbendichtring 105 dem Innendurchmesser des Gehäuses 101 entspricht.

Der Kolben 104 kann durch den Druckluftanschluss 103 mit Druckluft beaufschlagt werden, die auch durch diesen Anschluss ausströmen kann.

Wie Fig. 1 zeigt, ist der Kolben 104 im mittleren Bereich abgesenkt, so dass ein Druckraum 106 entsteht.

Durch den Kolben 104 wird noch ein weiterer Raum 107 begrenzt, in den eine kegelige Rückholfeder 108 und eine Federspeicherfeder 109 eingesetzt ist.

Die Federspeicherfeder 109 ist zwischen den Kolben 104 und einen Federspeicher-kolben 110 gesetzt, dessen Durchmesser kleiner ist als der Innendurchmesser des Gehäuses.

Die Rückholfeder 108 ist zwischen die von der Federspeicher abgewandte Seite des Federspeicherkolbens 110 und den vom Deckel abgewandte inneren Endbereich des Gehäuses 101 1 gesetzt.

Der Federspeicherkolben 110 liegt an seinem Innenumfang auf einem Kragen 111 einer Kolbenstange 112, die eine im Gehäuse 101 auf dessen vom Deckel 102 abgewandten Ende ausgebildete Öffnung 113 durchsetzt und zur Betätigung einer Zuspannvorrichtung einer Bremse dient.

Ein pneumatisch betätigbarer Sperrmechanismus 116 ist in einem mittigen Aufnahmeraum 117 des Kolben 104 an dessen zum Deckel 102 gewandten Seite des Kolbens 104 untergebracht, welcher den Sperrmechanismus aufnimmt.

Die Kolbenstange 112 ist hülsenförmig gestaltet und mit einem Innengewinde versehen, in dass eine mit Außengewinde versehene Gewindespindel 114 eingreift. Die Gewindespindel 114 ist nicht selbsthemmend ausgelegt. Sie ist vorzugsweise an einem ihrer Enden direkt oder über Zwischenelemente mit dem pneumatisch betätigbaren Sperrmechanismus 116 gekoppelt, der hier in Form einer pneumatisch betätigbaren Kupplung oder Bremse ausgebildet ist. Im dargestellten Ausführungsbeispiel ist dieser Sperrmechanismus als formschlüssige Kupplung ausgebildet.

Die Kupplung ist hier in vorteilhafter und kompakt bauender Weise zwischen den Axialflächen einer noch zu erläuternden Lagerscheibe 132, die mit der Gewindespindel drehfest gekoppelt ist, und einem Sperrmechanismuskolben 121 ausgebildet.

Der Sperrmechanismuskolben 121 ist an seinem Innen- und seinem Außenumfang mittels Kolbenringdichtungen 122, 123 gegen die Gewindespindel 114 und den Aufnahmeraum 117 abgedichtet.

Der Sperrmechanismuskolben 121 ist über einen Druckraum 124 über eine Druckluftleitung (hier nicht dargestellter Weise) mit Druckluft beaufschlagbar, wodurch die Kupplung in Eingriff gebracht werden kann. Die Gewindespindel 114 ist entsprechend durch Druckluftbeaufschlagung des Druckraums 124 unterhalb des Sperrmechanismuskolbens 121 an Drehungen gehindert, so dass die FBA-Bremse außer Funktion setzbar ist.

Die Gewindespindel 114 ist über Wälzkörper 118 am Kolben 104 abgestützt.

In der linksseitigen Stellung der Fig. 1 ist die Kupplung geschlossen bzw. die pneumatisch betätigbare Sperrvorrichtung aktiviert, so dass die Gewindespindel 114 gegen Drehungen gesichert ist.

Soll nun der Federspeicherkolben 110 in die in der rechtsseitigen Darstellung der Fig. 1 dargestellte Feststellbremsstellung überführt werden, wird die von dem Sperrmechanismuskolben 121 in die Kupplung geleitete Kraft durch Druckabsenkung im Raum 124 verringert, so dass die von der Federspeicherfeder 110 aufgebrachte Kraft bewirkt, dass sich die Gewindespindel 114 dreht, wobei der Federspeicherkolben 110 mit der Kolbenstange 112 in der Bremsposition verschoben wird.

Die Drehzahl ist durch die Bremskraft der Kupplung regelbar, so dass auch die lineare Bewegung des Federspeicherkolbens 110 gesteuert werden kann.

Zum Lösen der Bremsstellung wird entsprechend der vorherigen Ausführung der Druckraum 106 mit Druck beaufschlagt. Da der Feststellbremskolben 121 jetzt drucklos ist, kann sich die Gewindespindel 114 verdrehen und der Federspeicherkolben 110 wird entgegen der Wirkung der Federspeicherfeder 109 in die Ausgangsstellung zurückfahren kann.

Bei Betriebsbremsungen bleibt die Kupplung in Bremsstellung, so dass die beiden Kolben 104, 110 gemeinsam in die Bremsstellung bewegt werden, ohne ihre relative Stellung zueinander zu verändern. Die Wirkung der Federspeicherfeder 109 kann sich in diesem Zustand nicht entfalten. Analoges gilt für das Lösen der Bremse nach Betriebsbremsungen.

Bei dem Kompaktkombizylinder 100 ist die Funktion des Feststellbremszylinders in den Betriebsbremszylinder integriert. Die Federspeicherfeder 109 wird hierbei nicht mehr über einen separaten Federspeicherkolben 110 betätigt, sondern über den Kolben 104 des Betriebsbremszylinders. Um die Feststellbremse zu lösen, wird für eine kurze Zeitspanne der BBA-Kolben mittels einer speziellen Ansteuerung mit Druckluft beaufschlagt.

Wie vorstehend beschrieben, erfolgt das Lösen der Feststellbremse bzw. des Feststellbremsabschnittes im Regelfall mit Hilfe von Druckluft.

Daneben ist es aber auch möglich, den Feststellbremsabschnitt bei einem Druckverlust manuell mit einer manuell betätigbaren Lösevorrichtung zu lösen.

Bei konventionellen Kombizylindern wird dazu die Feder mit Hilfe einer Gewindespindel (der so genannten Lösespindel) zurückgezogen. Die Funktion des Betriebsbremszylinders ist dadurch nicht beeinträchtigt.

Beim Kompaktkombizylinder kann dies nicht auf so einfache Weise dargestellt werden, da der BBA-Kolben und die Federspeicherfeder mit einander verbunden sind. Würde man die Federspeicherfeder 109 durch eine von außen zugängliche Gewindespindel zurückziehen, wäre auch der BBA-Kolben blockiert und folglich auch die Funktion des BBA-Zylinders nicht mehr gegeben.

Zum manuellen Lösen der Federspeicherfeder ist daher eine manuell betätigbare Lösevorrichtung vorteilhaft, die es ermöglicht, die Federspeicherwirkung bei Druckverlust ohne Beeinträchtigung der BBA-Funktion aufzuheben. Ferner soll es möglich sein, nach dem Lösevorgang die FBA-Wirkung durch einen manuellen Vorgang wieder herzustellen. Dies wird dadurch erreich, dass der manuell betätigbaren Lösevorrichtung eine ebenfalls manuell betätigbare Sperrvorrichtung zugeordnet ist. Die im Anschluss dargestellte und näher beschriebene Sperrvorrichtung basiert auf einem Ratschenmechanismus.

Der Ratschenmechanismus weist eine Lagerscheibe 132 auf, die mit der Gewindespindel 114 drehfest gekoppelt oder einstückig mit dieser ausgebildet ist. Sie ist mit Wälzkörpern 125 an einer Topfscheibe 135 abgestützt und je nach Funktionsstellung der Sperrvorrichtung, die zwischen diesen beiden Elementen 132, 135 wirkt, relativ zu dieser drehbar. Diese Lagerscheibe 132 weist eine Ausnehmung 119 für eine Sperrklinke 133 auf und einen Stift 137, der zur Drehmomentübertragung dient. Die Sperrklinke 133 ist drehbar in die Lagerscheibe 132 eingesetzt, durch einen angeformten Bolzen 120 mit der Steuerscheibe 134 verbunden und wird durch eine Blattfeder 138 radial nach außen gedrückt.

Der Ratschenmechanismus umfasst ferner eine Steuerscheibe 134 mit einer Steuerkontur 139, einem bogenförmigen Langloch 140 und einem mittig angeordneten sechskantförmigen Durchbruch.

Die Steuerkontur 139 dient zur Ein- und Ausschaltung der Sperrklinke 133. Das bogenförmige Langloch 140 dient dagegen ab einem bestimmten Winkelweg zur Übertragung des Drehmoments auf die Lagerscheibe 132. Der Innensechskant dient zur Einleitung des Drehmoments in die Steuerscheibe 134.

Ein profilierter Betätigungsdom 136 dient zur Einleitung des manuell aufgebrachten Drehmoments.

Ferner dient er zur Ein- und Ausschaltung des Mechanismus. Der Betätigungsdom 136 ist im Gehäuse 101 des Bremszylinders dreh und schwenkbar gelagert.

Der Ratschenmechanismus umfasst ferner die Topfscheibe 135 mit Innenverzahnung, welche mit der Sperrklinke 133 mit entsprechender Verzahnung beim manuellen Lösevorgang im Eingriff ist. Die Topfscheibe 135 stützt sich am Kolben 104 ab und ist relativ zu diesem nicht verdrehbar.

Da es sich um einen formschlüssigen Ratschenmechanismus handelt, ist eine sichere und schlupffreie Arretierung der Federspeicherfeder gewährleistet.

Die Funktion dieser Anordnung ist wie folgt.

Beim manuellen Lösen der Federspeicherfeder 109 muss die Gewindespindel 114 mit Hilfe eines Schraubenschlüssels zurückgedreht werden.

Das Drehmoment wird dabei über den Betätigungsdorn 136 in die Steuerscheibe 134 übertragen. Durch das Verdrehen der Steuerscheibe 134 relativ zur Lagerscheibe 132 wird die Sperrklinke 133 durch die Steuerkontur 139 zum Eingriff in die Verzahnung der Topfscheibe 135 freigegeben. Die Sperrklinke 133 wird dabei durch die Blattfeder 138 elastisch gegen die Innenverzahnung der drehfesten Topfscheibe 135 gedrückt. Gleichzeitig wird nach der Überdrehung des Steuerwinkels über das bogenförmige Langloch 140 und einem entsprechenden Stift 137 in der Lagerscheibe 132 das Drehmoment von der Steuerscheibe 134 in die Lagerscheibe 132 und von dort in die Gewindespindel 114 übertragen.

Da die Sperrklinke 133 aufgrund der richtungsabhängigen Sperrwirkung ein selbsttätiges Zurückdrehen der Gewindespindel 114 verhindert, kann der Schraubenschlüssel ohne Aufdrehen der Gewindespindel 114 umgesetzt werden.

Dieser Vorgang kann solange wiederholt werden, bis die Federspeicherfeder die Lösestellung für die Feststellbremse erreicht hat.

Wenn die Federspeicherfeder von der Position "Federspeicher gelöst" manuell in die Position "Federspeicher eingelegt" gebracht werden soll, muss mit dem Schraubenschlüssel eine Drehbewegung in Sperrrichtung des Ratschenmechanismus ausgeführt werden. Dabei wird zunächst die Steuerscheibe 134 relativ zur Lagerscheibe 132 so weit verdreht, bis die Sperrklinke 133 durch die Steuerkontur 139 aus der Innenverzahnung der Topscheibe 135 gezogen wird. Sobald dieser Zustand erreicht wird, kann sich die Gewindespindel 114 verdrehen.

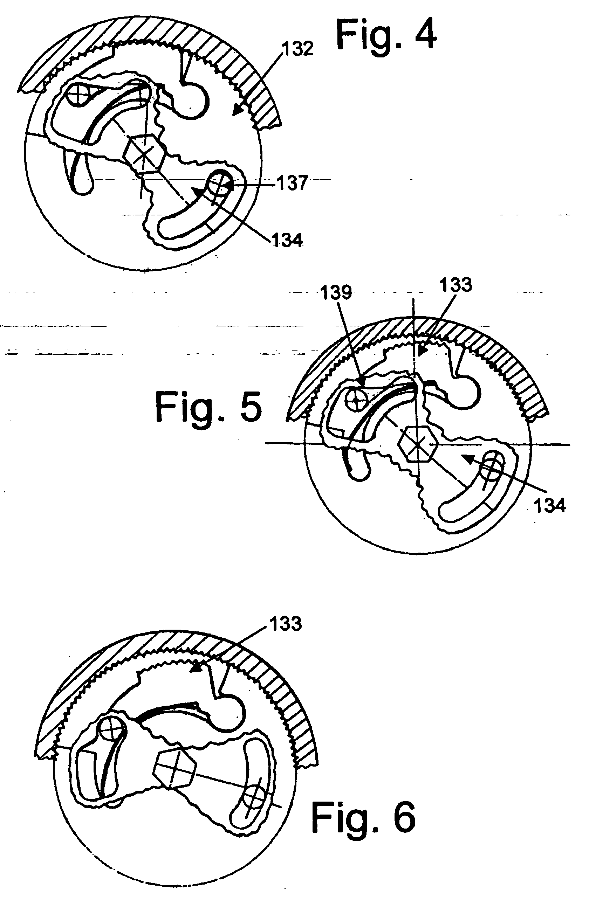

Fig. 5 zeigt ein derartiges manuelles Zustellen der Federspeicherbremse. Die Steuerscheibe 134 wird in dieser Figur nach links verdreht, wodurch die Sperrklinke 133 über die Kontur 139 aus der Verzahnung gezogen wird. Die Lagerscheibe 132 kann sich hierdurch bis zur nächsten Einrastung der Sperrklinke 133 drehen.

Da sich die Gewindespindel 114 schneller bewegt als die vom Schraubenschlüssel geführte Steuerscheibe 134 kommt es zu einer Relativbewegung zwischen Lagerscheibe 132 und Steuerscheibe 134 und folglich wieder zum Einrasten der Sperrklinke 133 in der Innenverzahnung der drehfesten Topfscheibe 135. Damit wird gewährleistet, dass sich die Gewindespindel 114 nur so weit und so schnell dreht, wie von der Drehbewegung des Schraubenschlüssels vorgegeben wird.

Hierzu ist es notwendig den Betätigungsdorn 136 mit Hilfe eines Schraubenschlüssels in Richtung "Federspeicherbremse einlegen" zu drehen bis eine weitere Drehung nicht mehr möglich ist. Dadurch wird erreicht, dass die Steuerscheibe 134 relativ zur Lagerscheibe 132 verdreht wird und der Schaltpin der Sperrklinke 133 in eine Einraststellung auf der Steuerkontur 139 gebracht wird.

In Fig. 6 ist die manuelle Lösevorrichtung in ihrer deaktivierten Stellung dargestellt. Die Sperrklinke 133 verharrt in ihrer Ruheposition.

Fig. 4 zeigt die Sperrstellung des Freilaufs. Die Lagerscheibe 132 wird durch die Steuerscheibe 134 über den Stift 137 nach rechts gedreht. Die Lagerscheibe 132 kann sich in dieser Stellung nicht selbsttätig nach links drehen.

Wie vorstehend beschrieben, wird beim manuellen Lösevorgang der Federspeicherbremse mit Hilfe des so genannten Betätigungsdorns 136 und des Ratschenmechanismus 126 die Gewindespindel 114 zum Zurückziehen der Federspeicherfeder 109 mit einem Schraubenschlüssel verdreht.

Der Betätigungsdom 136 steht beim manuellen Lösevorgang in Kontakt mit der manuellen Drehvorrichtung 127 zum Ansetzen eines Betätigungswerkzeuges, insbesondere eines Schraubenschlüssels. Die Drehvorrichtung 127 ist so gestaltet, dass z.B. beim Zurückdrehen, sprich Lösen des Federspeichers eine äußere Buchse 128 durch eine spezielle Formgebung in axialer Richtung einen Weg (Hub) ausführt, bis eine Drehmomenteinleitung möglich ist.

Durch diesen Axialhub ergibt sich zwischen der äußeren Buchse 128 und einem inneren Bolzen 129 stirnseitig eine Abstufung. Aufgrund dieser eindeutigen Konturänderung kann der manuelle Lösezustand der Federspeicherbremse visuell erkannt bzw. ertastet werden.

Da die Gewindespindel 114 über ein nicht selbst hemmendes Steilgewinde verfügt, wird zunächst beim Zudrehen des Federspeichers, also beim manuellen Einlegen der Federspeicherbremse, ein Drehmoment auf den Schraubenschlüssel ausgeübt, bis die Expansion der Federspeicherfeder 109 durch die Gegenkraft des Bremshebels zum Stillstand kommt. Wenn nun mit dem Schraubenschlüssel in Zustellrichtung der Feder speicherfeder 109 weitergedreht wird, wird die äußere Buchse 128 aus der stabilen "Lösestellung" in die Normal-stellung (Federspeicher frei) gebracht und die stirnseitige Abstufung aufgehoben.

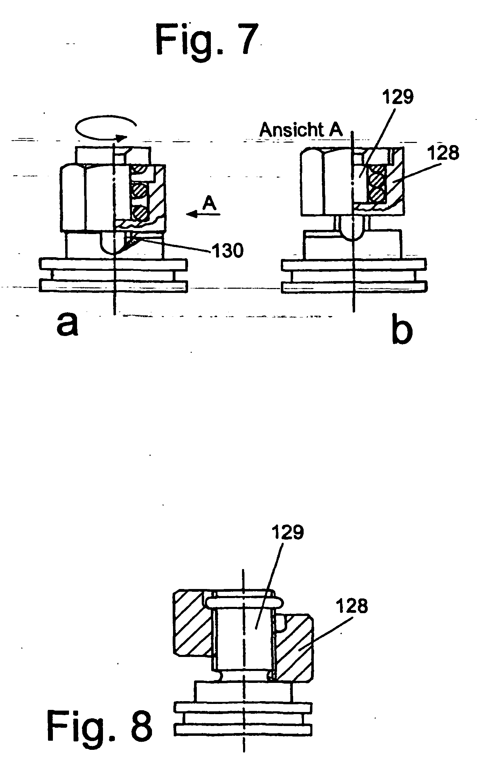

In Fig. 7 und 8 sind zwei konstruktive Beispiele dargestellt.

Die erste Ausführung nach Fig. 7a, b hat stirnseitig eine spezielle Nockenkontur 130. Durch Verdrehung der Sechskantbuchse 128 um 90° ergibt sich ein Axialhub. Diese Ausführung bietet einen Vorteil hinsichtlich kostengünstiger, spanloser Herstellung (z.B. Sintern)

Die zweite Ausführung nach Fig. 8 besteht aus einer Mutter 128 und einem Gewindebolzen 129. Je nach Drehrichtung nimmt die Mutter 128 die obere oder untere Position ein. Durch entsprechende Gestaltung kann somit eine Stufe zur Indikation der manuellen Federspeicherarretierung erreicht werden.

### Bezugszeichenliste

- Kompaktbremszylinder: 100
- Gehäuse: 101
- Deckel: 102
- Druckluftanschlüsse: 103
- Kolben: 104
- Umfangsdichtring: 105
- Druckraum: 106
- Raum: 107
- Rückholfeder: 108
- Federspeicherfeder: 109
- Federspeicherkolben: 110
- Kragen: 111
- Kolbenstange: 112
- Öffnung: 113
- Gewindespindel: 114
- Sperrmechanismus: 116
- Aufnahmeraum: 117
- Wälzkörper: 118
- Ausnehmung: 119
- Bolzen: 120
- Sperrmechanismuskolben: 121
- Kolbendichtungen: 122, 123
- Druckraum: 124
- Wälzkörper: 125
- Ratschenmechanismus: 126
- Drehvorrichtung: 127
- Buchse: 128
- Bolzen: 129
- Nockenkontur: 130
- Lagerscheibe: 132
- Sperrklinke: 133
- Steuerscheibe: 134
- Topfscheibe: 135
- Betätigungsdom: 136
- Stift: 137
- Blattfeder: 138
- Steuerkontur: 139
- Langloch: 140

## Patentansprüche

1. Bremszylinder für pneumatisch betätigte Fahrzeugbremsen, insbesondere für Nutzfahrzeuge, mit
a. einem Federspeicherbremsabschnitt zur Durchführung von Feststellbremsvorgängen mittels einer Federspeicherfeder (109), und einem Betriebsbremsabschnitt zur Durchführung druckluftbetätigter Betriebsbremsungen, wobei der Federspeicherbremsabschnitt und der Betriebsbremsabschnitt zu einer baulichen Einheit in einem Gehäuse (101) zusammengefasst sind,
b. wobei das Gehäuse (101) von einem Kolben (104) in zwei Räume (106, 107) unterteilt ist, von denen der eine der beiden Räume (106) als Druckraum zum Betätigen des Betriebsbremsabschnittes dient, und wobei die Federspeicherfeder (109) des Federspeicherabschnittes in dem weiteren Raum (107) auf der gegenüberliegenden Seite des Kolbens (104) angeordnet ist,
c. wobei die Federspeicherfeder (109) auf einen weiteren Federspeicherkolben (110) im Raum (107) wirkt, der mittels eines pneumatisch betätigbaren Sperrmechanismus (116) gegenüber dem Kolben (104) arretierbar und durch Lösen des Sperrmechanismus (110) von diesem lösbar ist, und der direkt oder über weitere Elemente mit einer Kolbenstange (112) zum Betätigen der Fahrzeugbremse verbunden ist,
d. wobei nach dem Lösen des Sperrmechanismus (116) die Federspeicherfeder (109) zwischen den beiden Kolben (104, 110) wirkt und diese bei einer Feststellbremsung relativ zueinander verschiebt,
**dadurch gekennzeichnet, dass**
e. der Bremszylinder neben dem pneumatisch betätigbaren Sperrmechanismus (116) eine manuell betätigbare Lösevorrichtung zum manuellen Lösen des Federspeicherbremsabschnittes aufweist und eine Vorrichtung, die dazu ausgelegt ist, den manuellen Lösezustand des Federspeicherbremsabschnittes außerhalb des Gehäuses (101) visuell zu erkennen.

2. Bremszylinder nach einem der vorstehenden Ansprüche, **dadurch gekennzeichnet, dass** der durch die Federspeicherfeder (109) belastete Federspeicherkolben (110) mit einer Gewindespindel (114) in Eingriff steht, die mit einer Bremse oder Kupplung als pneumatisch betätigbarer Sperrme-chanismus (116) in Wirkverbindung steht, so dass im Lösezustand des Bremszylinders die Spindel (114) gegen Drehung gesichert ist, und dass durch Verringerung oder Aufhebung des Eingriffs der Bremse oder Kupplung die Gewindespindel (114) drehfähig ist, so dass durch die Entspannung der Federspeicherfeder (109) der Federspeicherkolben (110) in Längsrichtung der Gewindespindel (114) verfahrbar ist.

3. Bremszylinder nach Anspruch 1 oder 2, **dadurch gekennzeichnet, dass** die manuell betätigbare Lösevorrichtung eine richtungsabhängige, manuell betätigbare Sperrvorrichtung für die Gewindespindel (114) aufweist, die als reibschlüssiges System ausgelegt ist, das einen Freilauf aufweist oder als formschlüssiges System, das einen Ratschenmechanismus aufweist.

4. Bremszylinder nach einem der vorstehenden Ansprüche, **dadurch gekennzeichnet, dass** die Lösevorrichtung eine manuelle Drehvorrichtung (127) zum Ansetzen eines Betätigungswerkzeuges, insbesondere eines Schraubenschlüssels, aufweist.

5. Bremszylinder nach einem der vorstehenden Ansprüche, **dadurch gekennzeichnet, dass** die Lösevorrichtung einen Betätigungsdom (136) aufweist, der beim manuellen Lösevorgang in Wirkverbindung mit der Drehvorrichtung (127) zum Ansetzen eines Betätigungswerkzeuges, insbesondere eines Schraubenschlüssels, steht.

6. Bremszylinder nach einem der vorstehenden Ansprüche, **dadurch gekennzeichnet, dass** die Drehvorrichtung (127) derart gestaltet ist, dass beim Einlegen oder Lösen des Federspeichers eine äußere Buchse (128) durch eine spezielle Formgebung in axialer Richtung einen sichtbaren Weg (Hub) auf einem inneren Bolzen (129) ausführt, bis eine Drehmomenteinleitung möglich ist.

7. Bremszylinder nach einem der vorstehenden Ansprüche, **dadurch gekennzeichnet, dass** die äußere Buchse (128) und der innere Bolzen (129) derart ausgestaltet sind, dass sich durch den Axialhub zwischen der äußeren Buchse (128) und dem inneren Bolzen (129) eine visuell erkennbare Konturänderung ergibt.

8. Bremszylinder nach einem der vorstehenden Ansprüche, **dadurch gekennzeichnet, dass** zwischen die äußere Buchse und der inneren Bolzen (129) eine Nockenkontur (130) derart ausgebildet ist, dass sich durch Verdrehung der Sechskantbuchse ein Axialhub der äußeren Buchse (129) ergibt.

9. Bremszylinder nach einem der vorstehenden Ansprüche, **dadurch gekennzeichnet, dass** die äußere Buchse als Mutter (128) ausgestaltet ist, welche auf einem Gewindebolzen (129) verdrehbar ist.

## Claims

1. Brake cylinder for pneumatically actuated vehicle brakes, in particular for commercial vehicles, having
a. a spring brake section for carrying out parking brake operations by means of an accumulator spring (109), and a service brake section for carrying out pneumatically actuated service brake operations, the spring brake section and the service brake section being combined in a housing (101) to form one structural unit,
b. the housing (101) being divided by a piston (104) into two chambers (106, 107), of which one of the two chambers (106) serves as pressure chamber for actuating the service brake section, and the accumulator spring (109) of the spring brake section being arranged in the further chamber (107) on the opposite side of the piston (104),
c. the accumulator spring (109) acting in the chamber (107) on a further spring accumulator piston (110) which can be locked with respect to the piston (104) by means of a pneumatically actuated locking mechanism (116) and can be released from the locking mechanism by release of the latter, and which is connected directly or via further elements to a piston rod (112) for actuating the vehicle brake,
d. after the release of the locking mechanism (116), the accumulator spring (109) acting between the two pistons (104, 110) and displacing them relative to one another in the case of a parking brake operation,
**characterised in that**
e. in addition to the pneumatically actuated locking mechanism (116), the brake cylinder has a manually actuated release device for manually releasing the spring brake section, and an apparatus which is designed to visually detect the manual release state of the spring brake section outside the housing (101).

2. Brake cylinder according to any of the preceding claims, **characterised in that** the spring accumulator piston (110) which is loaded by the accumulator spring (109) is in engagement with a threaded spindle (114) which is operatively connected to a brake or clutch as pneumatically actuated locking mechanism (116), with the result that the spindle (114) is secured against rotation in the release state of the brake cylinder, and **in that** the threaded spindle (114) is capable of rotation as a result of reduction or cancellation of the engagement of the brake or clutch, with the result that the spring accumulator piston (110) can be moved in the longitudinal direction of the threaded spindle (114) as a result of the relief of the accumulator spring (109).

3. Brake cylinder according to claim 1 or 2, **characterised in that** the manually actuated release device has a direction-dependent, manually actuated locking apparatus for the threaded spindle (114), which is designed as a non-positive-locking system which has a free wheel or as a positive-locking system which has a ratchet mechanism.

4. Brake cylinder according to any of the preceding claims, **characterised in that** the release device has a manual rotating apparatus (127) for attaching an actuating tool, in particular a spanner.

5. Brake cylinder according to any of the preceding claims, **characterised in that** the release device has an actuating mandrel (136) which, during the manual release operation, is operatively connected to the rotating apparatus (127) for attaching an actuating tool, in particular a spanner.

6. Brake cylinder according to any of the preceding claims, **characterised in that** the rotating apparatus (127) is designed in such a way that, during engagement or release of the spring accumulator, an outer sleeve (128) moves, as a result of a special shape, a visible travel (stroke) on an inner pin (129) in the axial direction until an introduction of torque is possible.

7. Brake cylinder according to any of the preceding claims, **characterised in that** the outer sleeve (128) and the inner pin (129) are designed in such a way that the axial stroke between the outer sleeve (128) and the inner pin (129) results in a contour change which can be detected visually.

8. Brake cylinder according to any of the preceding claims, **characterised in that** a cam contour (130) is formed between the outer sleeve and the inner pin (129) in such a way that rotation of the hexagonal sleeve results in an axial stroke of the outer sleeve (129).

9. Brake cylinder according to any of the preceding claims, **characterised in that** the outer sleeve is designed as a nut (128) which can be rotated on a threaded pin (129).

## Revendications

1. Cylindre de frein pour des freins de véhicule à actionnement pneumatique, notamment pour des véhicules utilitaires, comprenant
a. une partie de frein à ressort accumulateur, pour effectuer des opérations de freinage de stationnement au moyen d'un ressort (109) accumulateur, et une partie de frein de service, pour effectuer des freinages de service actionnés par de l'air comprimé, la partie de frein à ressort accumulateur et la partie de frein de service étant rassemblées en une unité de construction dans une enveloppe (101),
b. dans lequel l'enveloppe (101) est subdivisée par un piston (104) en deux compartiments (106, 107), dont l'un (106) des deux sert de chambre de pression pour l'actionnement de la partie de frein de service, et dans lequel le ressort (109) accumulateur de la partie de ressort accumulateur est monté dans l'autre compartiment (107) du côté opposé du piston (104),
c. dans lequel le ressort (109) accumulateur agit dans le compartiment (107) sur un autre ressort (110) accumulateur, qui peut être arrêté par rapport au piston (104) au moyen d'un mécanisme (116) de blocage à actionnement pneumatique et qui peut en être détaché en débloquant le mécanisme (116) de blocage et qui est relié directement ou par d'autres éléments à une tige (112) de piston pour l'actionnement du frein du véhicule,
d. dans lequel, après le déblocage du mécanisme (116) de blocage, le ressort (109) accumulateur agit entre les deux pistons (104, 110) et les déplace l'un par rapport à l'autre dans un freinage de stationnement,
**caractérisé en ce que**
e. le cylindre de frein a, outre le mécanisme (116) de blocage à actionnement pneumatique, un dispositif de desserrage à actionnement manuel, pour le desserrage manuel de la partie de frein à ressort accumulateur, et un dispositif, qui est conçu pour reconnaître visuellement à l'extérieur de l'enveloppe (101) l'état de desserrage manuel de la partie de frein à ressort accumulateur.

2. Cylindre de frein suivant l'une des revendications précédentes, **caractérisé en ce que** le piston (110) du ressort accumulateur chargé par le ressort (109) accumulateur entre en prise avec une broche (114) filetée, qui est en liaison de coopération avec un frein ou un accouplement servant de mécanisme (116) de blocage à actionnement pneumatique, de sorte que, à l'état desserré du cylindre de frein, la broche (114) est empêchée de tourner et de sorte que, en diminuant ou en faisant cesser la prise du frein ou de l'accouplement, la broche (114) filetée est susceptible de tourner, de sorte que, par la détente du ressort (109) accumulateur, le piston (110) du ressort accumulateur peut être déplacé dans la direction longitudinale de la broche (114) filetée.

3. Cylindre de frein suivant la revendication 1 ou 2, **caractérisé en ce que** le dispositif de desserrage à actionnement manuel a, pour la broche (114) filetée, un dispositif de blocage en fonction de la direction et à actionnement manuel, qui est conçu comme un système à frottement, qui a une roue libre, ou sous la forme d'un système à complémentarité de forme, qui a un mécanisme à cliquet.

4. Cylindre de frein suivant l'une des revendications précédentes, **caractérisé en ce que** le dispositif de desserrage a un dispositif (127) de rotation manuel pour l'application d'un outil d'actionnement, notamment d'une clé à vis.

5. Cylindre de frein suivant l'une des revendications précédentes, **caractérisé en ce que** le dispositif de desserrage a un mandrin (136) d'actionnement, qui, lors de l'opération de desserrage manuelle, coopère avec le dispositif (127) de rotation pour l'application d'un outil d'actionnement, notamment d'une clé à vis.

6. Cylindre de frein suivant l'une des revendications précédentes, **caractérisé en ce que** le dispositif (127) de rotation est conformé de manière à ce que, lors de la mise sous tension ou du relâchement du ressort accumulateur, une douille (128) extérieure effectue, par un façonnage spécial dans la direction axiale, un trajet (course) visible sur un axe (129) intérieur jusqu'à ce que l'application d'un couple de rotation soit possible.

7. Cylindre de frein suivant l'une des revendications précédentes, **caractérisé en ce que** la douille (128) extérieure et l'axe (129) intérieur sont conformés de manière à donner une modification de contour reconnaissable visuellement par la course axiale entre la douille (128) extérieure et l'axe (129) intérieur.

8. Cylindre de frein suivant l'une des revendications précédentes, **caractérisé en ce qu'**un contour (130) de came est formé entre la douille extérieure et l'axe (129) intérieur, de manière à obtenir une course axiale de la douille (129) extérieure par rotation de la douille à six pans.

9. Cylindre de frein suivant l'une des revendications précédentes, **caractérisé en ce que** la douille extérieur est conformée en écrou (128), qui peut tourner sur un axe (129) fileté.
